# EUROPEAN PATENT APPLICATION

(11) **EP 2 980 739 A1**
(43) Date of publication of application: **03.02.2016**
(21) Application number: 15177494.0
(22) Date of filing: 20.07.2015
(51) Int. Cl.: G06Q 20/00, G07F 19/00, G06F 9/44

(54) **MULTI-DESTINATION ROUTING OF TRANSACTIONS**

(30) Priority: 31.07.2014 US 201414448403
(71) Applicant: NCR Corporation, Duluth, Georgia 30096 (US)
(72) Inventor: Amost, Mervin, London, Middlesex SE23 3BH (GB); Meiappan, Monish, Croydon, Surrey CR0 1HE (GB)
(74) Representative: MacLeod, Roderick William

(57) **Abstract**

Various embodiments herein each include at least one of systems, methods, software, and data structures that facilitate and perform aspects of multi-destination routing in payment processing transactions. Some embodiments include presenting a palate (204) of graphical representations of payment transaction data processing nodes, each node representing a data processing task that may be included in processing a payment transaction. Such embodiments may further include presenting a canvas (202) within which nodes maybe placed and linked, the links representing data processing routes between the nodes, and the nodes and links providing a graphical view of payment transaction processing routing. Some embodiments also include adding a node to the canvas (202) and a route from an output of one node to an input of another node. A data representation of the graphical view may then be stored and used to process payment transactions.

## Description

Transaction routing is becoming a dynamic endeavor as more and more entities become involved. Further, transaction security is demanding more scrutiny with regard to each transaction. As a result, there are many possible outcomes in a modem transaction. At the same time, transaction modeling and configuration development and processing tools have limiting constraints, such as being able to provide only two transaction end points, such as approve or decline. While additional data may be provided with a decline that may provide insight into reasoning for a declined transaction, available tools fail to provide flexibility to process transaction anomalies as needed.

To resolve this, some entities may resort to customized solutions, but such custom solutions are expensive and difficult to develop and maintain. A common solution, such as when more than a fixed number of available transaction processing endpoints are needed, is to initiate multiple transaction processes in sequence. However, if one fails, for whatever reason, all other transactions of the multiple transactions needed to be rolled back. Such solutions can become very complex, occupy multiple processing threads for extended periods, and redundantly utilize network resources. Such solutions not only lack capabilities to meet current demands for additional fraud scrutiny and flexibility, the additional computing infrastructure resources consumed confound service level agreements of payment processing entities, such as service level agreements to process each transaction within a certain period.

Various embodiments herein each include at least one of systems, methods, software, and data structures that facilitate and perform aspects of multi-destination routing in payment processing transactions.

Some embodiments include presenting a palate of graphical representations of payment transaction data processing nodes, each node representing a data processing task that may be included in processing a payment transaction. Such embodiments may further include presenting a canvas within which nodes may be placed and linked, the links representing data processing routes between the nodes, and the nodes and links providing a graphical view of payment transaction processing routing.

Some embodiments also include adding a node to the canvas and a route from an output of one node to an input of another node. A data representation of the graphical view may then be stored and used to process payment transactions.

According to a first aspect of the present invention there is provided a method comprising: presenting, in a user interface of a computing device, a palate of graphical representations of payment transaction data processing nodes, each node representing a data processing task that may be included in processing a payment transaction, each node including associated code to perform at least one data processing function; presenting, in the user interface, a canvas within which nodes maybe placed and linked, the links representing data processing routes between the nodes, and the nodes and links providing a graphical view of payment transaction processing routing; receiving input selecting a node from the palate and adding the selected node to the canvas; receiving input to add a route from an output of one node to an input of another node; and storing, on a data storage device, a data representation of the graphical view including data identifying each node and routes there between.

The method optionally further comprises: receiving an input command to retrieve and present a graphical rendering of the stored data representation; loading the stored data representation from the data storage device into a memory of the computing device; identifying each node included in the loaded data and routes between the identified nodes; and presenting, in the user interface of the computing device, the graphical view of the data representation.

The method optionally further comprises: receiving and storing input associating the stored data representation to a bank identifier that is identifiable in received transaction requests from a portion of a bank card number.

The method optionally further comprises: receiving, on another computer device, a payment transaction request including the merchant identifier; identifying the stored data representation, as stored on the data storage device, with the merchant identifier as a data retrieval key; and processing, on the another computing device, the payment transaction request according to the identified stored data representation.

Optionally, the payment transaction request is received via a first network and at least one node includes associated instructions executable to transmit, via a second network, a payment processing service call.

Optionally, at least one node of the stored data representation is a single representation of a plurality of nodes and routings therebetween.

Optionally, the at least one node, when rendered within the canvas of the user interface, is represented by a single graphical representation of a node, and the single graphical representation is selectable to open a graphical view of the plurality of nodes and routings therebetween represented by the single node.

According to a second aspect of the present invention there is provided a system comprising: at least one processor and at least one network interface device; a data storage device storing: data structures of data processing nodes that can be assembled into payment transaction routing processes, each node including at least one instruction to perform, or call a remote data processing service that performs, at least one data processing task related to payment transaction processing; and data structures of payment transaction routing processes comprised of reference data to data structures of data processing nodes, routing data linking nodes in a specified order and structure; a payment processing module executable by the at least one processor to: receive, via the at least one network interface device, a payment transaction request from a requestor; identify, in the data storage device, a data structure of an applicable payment transaction routing process; process the payment transaction request according to the payment transaction routing process defined in the identified data structure, including executing instructions of each node identified in the reference data of the identified data structure in a sequence according to the order and structure defined in the identified data structure; and transmit, via the at least one network interface device to the requestor, a result of the processing of the payment transaction request.

The data structures of payment transaction routing processes optionally include a merchant identifier, the merchant identifier forming at least a portion of a data retrieval key by which the data structures of payment transaction routing processes are identifiable and retrievable from the data storage device.

The system optionally further comprises: a development module executable by the at least one processor to: receive, via the at least one network interface device from a development requestor, a request for a data structure of a payment transaction process, the request including a merchant identifier; retrieve the requested payment transaction process data structure with the received merchant identifier with the request as a data retrieval key; and transmit, via the at least one network interface device, the retrieved payment transaction process data structure to the development requestor.

The development module is optionally further executable by the at least one processor to: receive an update to a payment transaction process data structure, the update including at least a merchant identifier; and store the update to a payment transaction process data structure identified based upon at least merchant identifier.

The data storage device optionally includes: a database management system that executes on at least one computing device to manage data stored on one or more of disk drives and memory; and at least one disk drive or memory that stores executable code files referenced by data managed and stored by the database management system.

According to a third aspect of the present invention there is provided a computer-readable storage medium, including instructions stored thereon, which when executed by at least one processor, cause the computer to implement the steps of the first aspect of the invention.

According to a fourth aspect of the present invention there is provided a multi-destination routing method executed by a payment processing module, the method comprising: receiving a payment transaction request from a requestor; identifying a data structure of an applicable payment transaction routing process, the data structure comprising (i) a plurality of data processing nodes, each node including at least one instruction to perform, or call a remote data processing service that performs, at least one data processing task related to payment transaction processing, and (ii) routing data linking nodes in a specified order and structure; and process the payment transaction request according to the payment transaction routing process defined in the identified data structure, including executing instructions of each node of the identified data structure in a sequence according to the routing data; and transmitting to the requestor a result of the processing of the payment transaction request.

According to a fifth aspect of the present invention there is provided a payment processing module implementing multi-destination routing, the module including a plurality of payment transaction routing processes, each payment transaction routing process comprising: (i) a plurality of node data structures each including at least one instruction to implement a data processing task; and (ii) routing data linking the plurality of nodes in a specified order and structure; the payment processing module being operable to: (a) receive a payment transaction request from a requestor; (b) identify an applicable routing process from the plurality of payment transaction routing processes; (c) process the payment transaction request according to the applicable routing process by using accessing the node data structures according to the routing data; and (d) transmit a result of the processing of the payment transaction request to the requestor.

The plurality of payment transaction routing processes may comprise: a credit card routing process, a bank card withdrawal routing process, a store card routing process, or the like.

A node data structure may comprise a plurality of node data structures within that node data structure, each including at least one instruction to implement a data processing task. In this way a node data structure can be created that uses existing node data structures.

A node data structure may comprise configured options, such as routing options, rollback options, and the like.

The payment processing module may comprise a core banking node data structure configured for a specific banking entity that is to perform payment processing transactions relating to its customers.

Each node data structure may include trailing information defining properties of that node data structure. The trailing information may comprise expected data (that is, the type of data that is expected, such as a credit card number, a bank identification number, and the like).

These and other aspects of the present invention will be apparent from the following specific description, given by way of example, with reference to the accompanying drawings, in which:
FIG. 1 is an architectural diagram of a system, according to an example embodiment;
FIG. 2 is a graphical user interface of a development environment, according to an example embodiment;
FIG. 3 is a block diagram of a system, according to an example embodiment;
FIG. 4 is a data structure illustration, according to an example embodiment;
FIG. 5 is a block flow diagram of a method, according to an example embodiment;
FIG. 6 is a block flow diagram of a method, according to an example embodiment;
FIG. 7 is a block flow diagram of a method, according to an example embodiment; and
FIG. 8 is a block diagram of a computing device, according to an example embodiment.

Various embodiments herein each include at least one of systems, methods, software, and data structures that facilitate and perform aspects of multi-destination routing in payment processing transactions. Some embodiments include a development tool that enables developers, administrators, and other users having responsibility and sufficient privileges to graphically model and define financial payment transaction processes having multiple dependencies and complexities. An example of a financial payment transaction process is the receiving and processing of a payment through tendering of account identifying data, such as with a credit card, debit card, prepaid card, or gift card, rather than providing physical currency.

Some embodiments include a workflow engine that executes transaction processes modeled and defined within a graphical user interface-based development tool. Each individual workflow generally includes actions or tasks that each, or groups of, maybe represented by a graphical element within a user interface. Graphical elements are placed on a canvas and links, referred to as routes, are defined between them. Some routes may include conditional routing that is determined during processing of a transaction based on an outcome of one or more tasks, such as a fraud detection process that may return a fraud indicator. For example, when a fraud indicator is returned by a fraud detection task, the transaction may be terminated rather than otherwise being allowed to continue. Embodiments including a graphical development environment allow visualization of transaction processing, rapid development, reuse of previously or separately developed processes through embedding, and simplified transaction processing maintenance. These and other embodiments may also include routing actions that enable a route type to be defined in a transaction processing process. Such routing actions may define routing rules based on an outcome of a routing attempt and on a result of the routing. For example, if a routing attempt fails, a stand in task or process may be triggered, such as when a transaction amount is less than a certain amount and the defined route is unavailable in the event of network outage or other fault. These and other embodiments are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in one embodiment. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

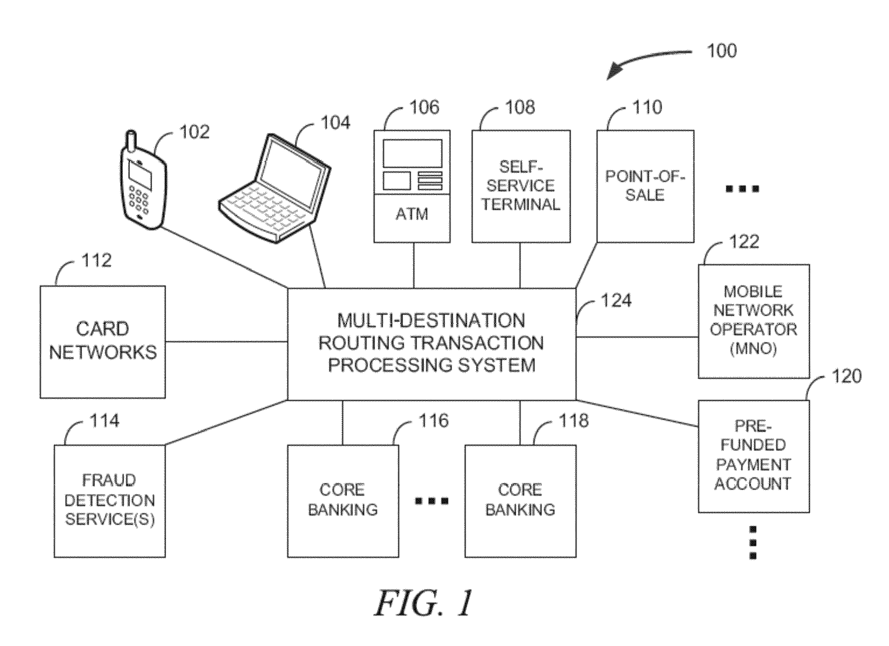

FIG. 1 is an architectural diagram of a system 100, according to an example embodiment. The system 100 is an example of a system with many different components, many of which are operated or owned by different entities and individuals, to facilitate payment processing in a modem economy. Each of these different components form an ecosystem of compatible entities that operate to provide many payment options.

For example, payments today may be made in any number of ways beyond just physical currency. Two readily available forms of payment are credit and debit cards. These cards may be issued by banks, stores, and financial service companies, among others. Other forms of payment are prepaid payment cards, gift cards, and the like. Another form of payment is check, but modem check processing includes reading and receiving check data at the point of sale and processing the check as a form of electronic payment closer to a credit card rather than traditional check processing. Additionally, some entities, such as stores, have begun issuing store debit cards that are tied to a cardholder's checking account. Payments with such cards are then processed as bank account automated clearinghouse (ACH) transactions. Further, these and other forms of payment may be associated with registered signatures, such as electronic codes that may be transmitted by mobile computing devices, radio frequency identification (RFID) chips, user identifier and password protected accounts, and the like. The system 100 provides a view of some of these payment options and although not all payment options are illustrated, the system 100 is provided only as an example and is not intended to exclude such additional and other payment options.

The system 100 includes a number of terminals and mechanisms through which payments may be made and currency withdrawn. For example, point-of-sale terminals 110 such as cash registers and standalone credit card transaction initiation devices, self-service terminals such as self-service checkouts and kiosks, automated teller machines (ATM), personal computers 104 such as when accessing electronic commerce websites to order products and services or to make payments, mobile devices 102 such as mobile phones and tablets through which content may be purchased and other transactions similar to personal computers 104 may be conducted, and the like. These terminals 102, 104, 106, 108, 110, among others, typically connect, either directly or indirectly, via one or more networks to a transaction processing system, such as the payment transaction processing system 124 (system 124). The one or more networks may be ad hoc connections made via a public switched telephone network (PSTN), secure communications via public networks such as virtual private network connections established via the Internet, dedicated networks, and other networks.

The system 124 may be operated by a retailer, a bank, a transaction service provider, a credit card network, or other entity. The system 124 operates to receive transaction requests from the terminals 102, 104, 106, 108, 110, such as for payments and withdrawals, and to fulfill those transaction requests according to a defined process for payment processing. Note that references to payment processing and associated process are also inclusive, in some embodiments, of withdrawal transactions, such as from savings, checking, and money market accounts utilizing an ATM card. The defined process may be associated with an operator of a terminal 102, 104, 106, 108, 110, a type of transaction being conducted (credit or debit card, store card, prepaid or gift card, adding value to a mobile network operator (MNO) or other third-party account, and the like), a mode of tendering of payment account information (e.g., physical card tendering, RFID tendering, check tendering, user tendering of account identifying data such as through a website), requirements of an entity involved in the transaction, among other factors.

As part of a payment process, the system 124 may communicate with other network entities such as a bank or credit card network 112 and one or more fraud detection services 114 such as may be called as web services, remote function calls, and the like. The system may also communicate with one or more core banking systems 116, 118, third-party systems such as systems of an MNO 122, prefunded payment account systems 120, and other third party systems.

In a common scenario, an initiator of a payment process, such as a consumer, will initiate a transaction via a terminal 102, 104, 106, 108, 110 choosing a product or service to purchase, such as goods at a store or online marketplace and a transaction amount is calculated. The consumer then provides or selects payment account information and the terminal 102, 104, 106, 108, 110 transmits the data to the system 124, such as a transaction amount, a merchant identifier, and the payment account information. The system 124 identifies a payment processing routing to execute and executes that process. The process may include a card number validation function, a fraud detection function (e.g., checking a payment account number against a list of known compromised payment account numbers, comparing a card holder place of residence against a merchant place of business and applying a rule), a banking function to debit the payment account and credit a merchant account, and any other functions that may be needed based on the identified payment processing routing.

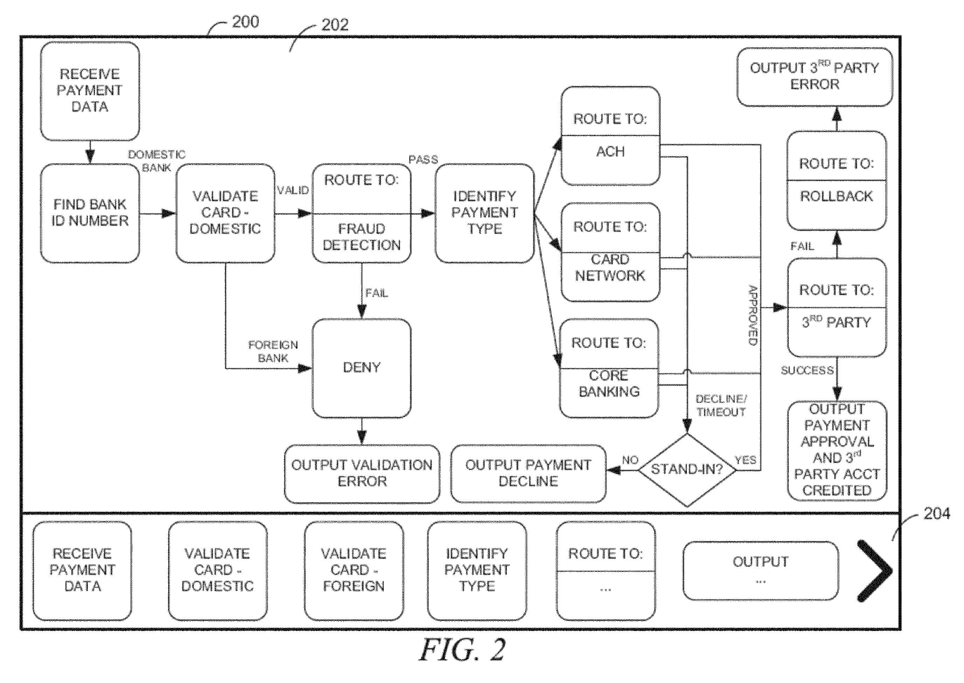

FIG. 2 is a graphical user interface 200 (GUI 200) of a development environment, according to an example embodiment. The GUI 200 is an example of a graphical development environment that is used in some embodiments to define and maintain a payment processing routing. The GUI 200 includes a payment transaction data routing and processing canvas 202 (canvas 202) and a palate 204 of selectable graphical representations of payment transaction data processing nodes that may be placed on the canvas 202 and linked to define routes of a payment processing routing. A payment process defined in the canvas 202 may then be stored and subsequently used as a payment processing routing, such as by the system 124 of FIG. 1.

Input may be received within the GUI 200 via one or more input devices of a computing device presenting a view of the user interface. For example, a pointing device such as a mouse, a touch screen, a keyboard, a stylus, and other input devices. A computing device application providing the view of the GUI 200 may be a thin or thick client application or app that executes on a computing device, such as a personal computer, tablet device, other mobile device, or within a web browser or app that executes on such a device.

The palate 204 includes selectable graphical representations of payment transaction data processing nodes. Each data processing node included in the palate 204 represents a data processing task, or set of tasks, that may be included in processing a payment transaction. Data processing nodes include associated code that is executable by a computer processor to perform at least one data processing function or to make a call of a data processing service via a network. Executable code is associated with a data processing node by including a reference to a code element storage location within a data processing node, such as by inclusion of a network address or addresses from which one or more code elements may be retrieved, such as JAVA® Archives (JARs) or other containers of code elements.

Some data processing nodes available in the palate 204 may be representations of other defined payment processes that may have been created within the canvas 202 and stored. Such abilities allow a process to be added within a process being developed or modified within the canvas 202. Some other data processing nodes may include configuration options, such as some ROUTE TO data processing nodes that include selectable options to specify what type of routing or data processing is to occur and configurations including rollback and stand-in strategy options. For example, a generic core banking data processing node may include selectable options for identifying a banking entity to perform the data processing. Such options provide embedding of processes within processes and allows for sequential definition of a single end-to-end process thereby avoiding many of the limitations of prior solutions. These types of data processing nodes, in some embodiments, may be selected by manipulating a single graphical representation of the data processing node, such as with a double pointer click, to view the underlying process.

The canvas 202 is a GUI 200 component within which data processing nodes are placed by selecting them from the palate 204, such as through drag-and-drop functionality, a double click, or other selection-and-move type functionality. Once placed on the canvas 202, data processing nodes may be configured and linked to one another with routes. Routes may be added by selecting a route object from the palate 204 in some embodiments, by selecting two data processing nodes within the canvas 202 and selecting a menu item, and by other modes depending on the particular embodiment. The links are graphically represented between the graphical representations of the graphical data processing nodes present in the canvas 202.

As a process is defined within the canvas 202, an end-to-end visualization is provided. In some embodiments, a process may be defined that is rather large and complex. To accommodate for such large processes, the canvas 202 in some embodiments includes zoom in-and-out and scroll left-to-right and up-and-down functionality. Some embodiments also allow annotations to be added to the canvas 202 with regard to a process, similar to comments that may be added to computer code. The annotations are non-executable, but can be used to add notes to a graphical representation of a defined payment transaction process.

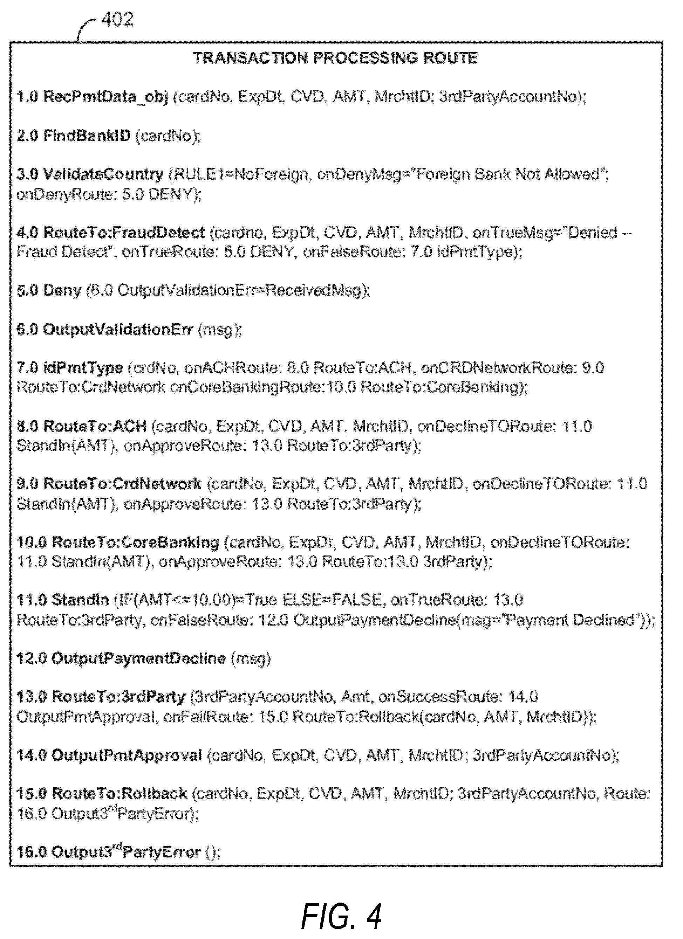

Once a user is finished manipulating a payment transaction processing process within the GUI 200, and in particular within the canvas 202, a save option may be selected, such as by selection of a menu option, pressing a combination of keyboard keys, or by default upon closing a view of the canvas 202. Storing of a payment transaction processing process, in some embodiments, includes storing a data representation of the graphical view of the payment transaction processing route including data identifying each data processing node present and routes therebetween as presented within the payment transaction data routing and processing canvas 202 of the GUI 200. An example of such a data representation is illustrated in FIG. 4. In some embodiments, the stored representation may be stored as a textual representation that identifies involved data processing nodes, routes between the nodes, a sequence and order of the data processing nodes, conditional routing information between the data processing nodes, arguments to be passed between data processing nodes as part of the routing, and other information. In other embodiments, executable or interpretive computer code may be generated based on code elements associated with data processing nodes, defined routings between data processing nodes, and other data defining a payment transaction processing process.

A stored representation may be later retrieved and again graphically presented within the canvas 202. Such embodiments may include receiving an input command within an application of the GUI 200 to retrieve and present a graphical rendering of the stored data representation. The stored data representation is then loaded from the data storage device on which it is stored, which may be a disk drive, database, or other storage mechanism, into a memory of the computing device. The loading may further identify each data processing node included in the loaded data and routes between the identified data processing nodes. The graphical view is then presented, which may include or generate a markup language representation of the graphical view that is then transmitted to a requesting client application.

In some embodiments, a defined process may be associated with a particular merchant by a merchant identifier, a bank or other payment account custodian such as a card issuer by a bank identification number included in a number of a presented bank card, a particular store-type, a geographic location from which transaction requests may be received, a mode in which payment account information is provided for the transaction, and other properties or circumstances that may be associated with a payment transaction. Thus, when a payment transaction is initiated, a system implementing defined payment processing routing, such as the system 124 of FIG. 1, can identify a proper process to select and execute.

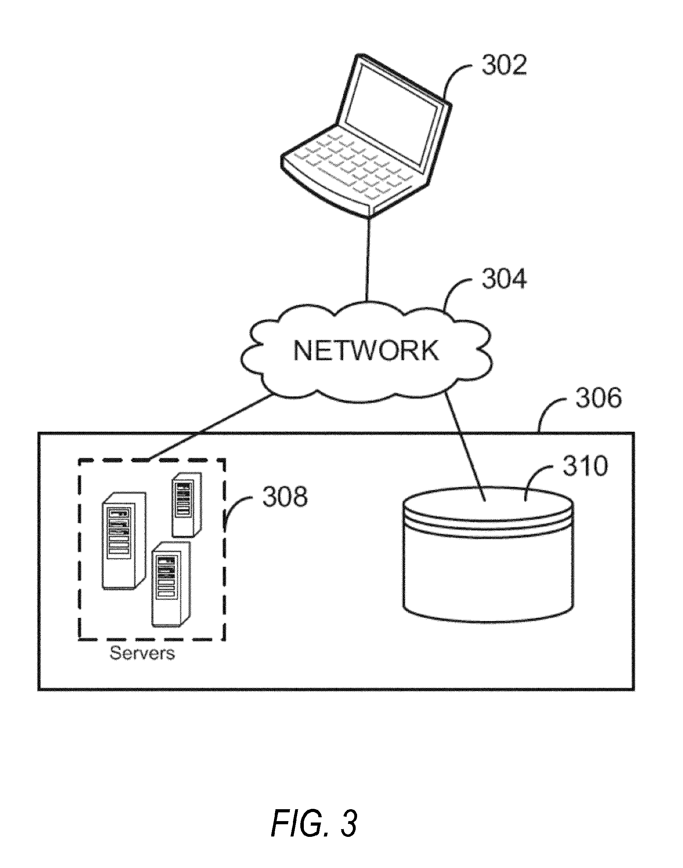

FIG. 3 is a block diagram of a system, according to an example embodiment. The system of FIG. 3 includes elements of a larger system 306, such as that of the system 124 of FIG. 1, that a developer or administrator may interact with when developing or modifying payment transaction processing processes. For example, a user of a computing device 302 may interact with an application thereon that provides the GUI 200 of FIG. 2. The computing device 302 may connect via a network 304 to the system 306 to retrieve stored data representations of defined processes, data processing nodes that are to be made available in the palate 204 of the GUI 200, and to store a new or modified data representation. Such data may be stored in whole or in part in a database 310 or in whole or in part on one or more other data storage mechanisms. Servers 308 may maintain an index of the stored data and may handle data requests to retrieve or store data from the computing device 302. The servers 308 may also be the computing platform on which payment processing transactions are received and processed, in whole or in part. Thus, in some such embodiments, as a payment processing routing is stored, the servers 308 may immediately implement the newly stored process.

FIG. 4 is a data structure 402 illustration, according to an example embodiment. The data structure 402 includes a transaction processing route data structure of a stored payment processing routing. More specifically, the data structure 402 provides an example data representation of the process modeled in the canvas 200 of FIG. 2.

The data structure 402 includes a set of numbered data processing nodes (1.0, 2.0, 3.0, ... 16.0). Each data processing node includes trailing information that defines various properties for the data processing node. For example, each data processing node includes a name that may link or associate the data processing node to one or more underlying executable code elements or other defined processes, e.g., the included "RouteTo:"data processing nodes reference other defined processes. The trailing data may also identify expected data to be received when the data processing node is invoked, such as with regard to data processing node 1.0, certain data items are expected to invoice the defined processes. This data includes a card number, expiration date, card validation data, a transaction amount, and a merchant identifier. Some embodiments, including the illustrated embodiment, include a third-party account number, such as mobile network operator account number associated with a mobile device to which monetary credit is to be added via the process.

In the example data structure 402, the process is executed in a top-down manner except where there are references to skip ahead, such as with regard to the 4.0 data processing node where when a false message is returned from a call to a fraud detection process indicating no fraud was detected, the process skips ahead to the 7.0 data processing node to identify the payment type. Similarly, the 7.0 data processing node identifies the payment card type and routes the process to the next appropriate node based thereon.

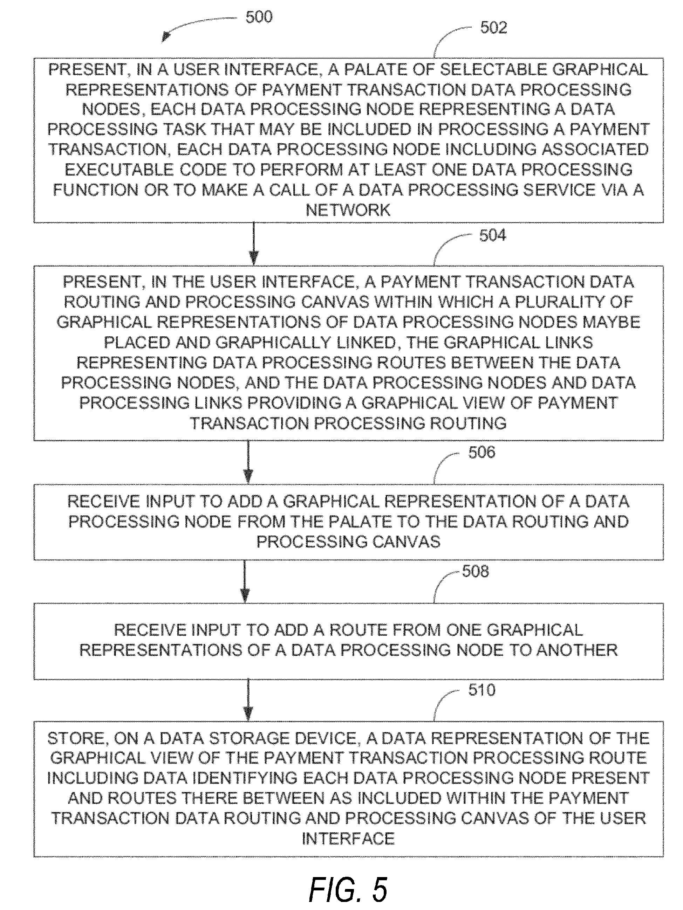

FIG. 5 is a block flow diagram of a method 500, according to an example embodiment. The method 500 is an example of method that may be performed by an application presenting a view of the GUI 200 of FIG. 2 and may execute on a computing device 300 of FIG. 3.

The method 500 includes presenting 502, in a user interface, a palate of selectable graphical representations of payment transaction data processing nodes. Each presented 502 data processing node represents a data processing task that may be included in processing a payment transaction and may be associated with executable code to perform at least one data processing function or to make a call of a data processing service via a network. Such data processing services may be called as a web service, a remote function call, via an intersystem message, and the like.

The method 500 further includes presenting 504, in the user interface, a payment transaction data routing and processing canvas. The payment transaction data routing and processing canvas is a user interface portion within which a plurality of graphical representations of data processing nodes maybe placed and graphically linked. The graphical links, when added, represent data processing routes between the data processing nodes. The data processing nodes and links, once added, provide a graphical view of payment transaction processing routing.

The method 500 may then receive 506 input to add a graphical representation of a data processing node from the palate to the data routing and processing canvas and then receive 508 additional input to add a route from one graphical representations of a data processing node to another. A data representation of the graphical representation may then be generated and stored 510, on a data storage device. The data representation is of the graphical view of the payment transaction processing route and includes data identifying each data processing node present and routes therebetween as included within the payment transaction data routing and processing canvas of the user interface. An example of such a data representation according to some embodiments is illustrated in FIG. 4 by data structure 402.

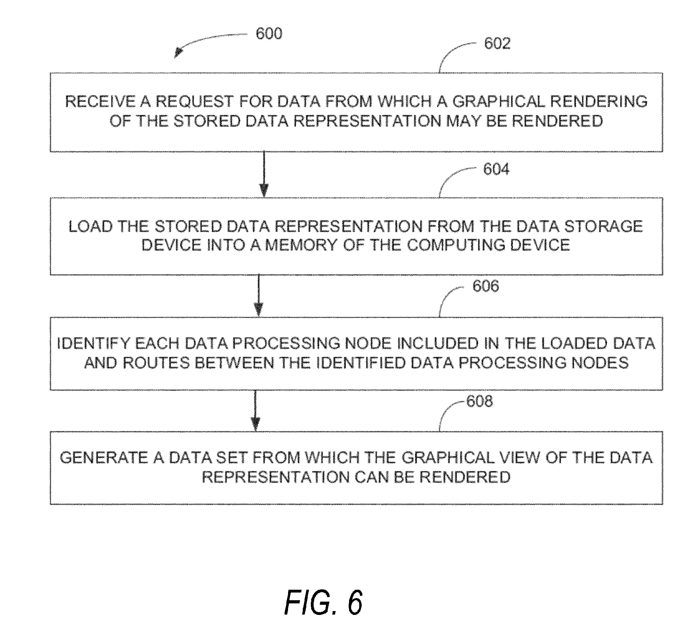

FIG. 6 is a block flow diagram of a method 600, according to an example embodiment. The method 600 is an example of another method that may be performed by an application presenting a view of the GUI 200 of FIG. 2 and may execute on a computing device 300 of FIG. 3. For example, the method 600 may be performed subsequent to the method 500 that is performed to create and store 510 the data representation from the graphical representation. The method 600 generally picks up from there after the graphical representation has been closed.

For example, the method 600 includes receiving 602 a request for data from which a graphical rendering of the stored data representation may be rendered. The method 600 then loads 604 the stored data representation from the data storage device into a memory of the computing device on which the method 600 is being performed. The method 600 then identifies 606 each data processing node included in the loaded data and routes between the identified data processing nodes and generates 608 a data set from which the graphical view of the data representation can be rendered. This may include generate a markup language representation of the graphical view, such as an extensible markup language (XML) representation. In other embodiments, such as when the client application that will present the graphical view is a thick client application, the data may simply be transmitted via a network to the client.

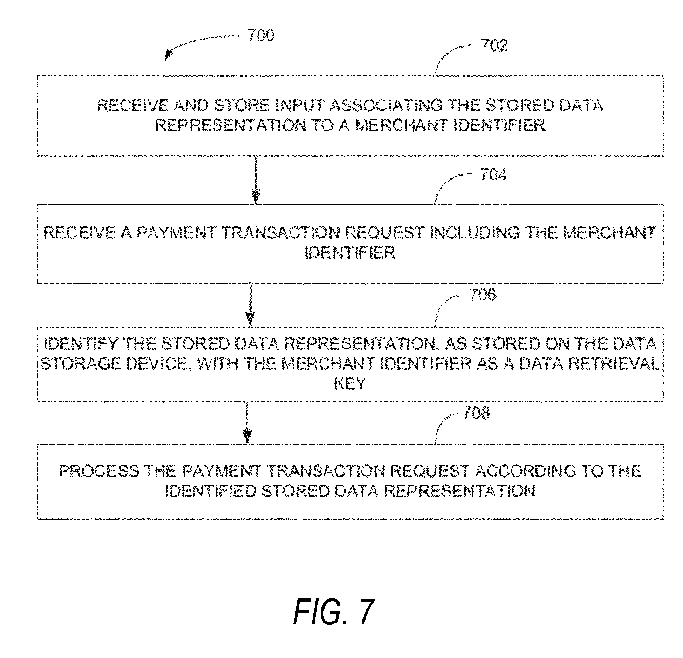

FIG. 7 is a block flow diagram of a method 700, according to an example embodiment. The method 700 is an example of a method that may be performed to process payments transactions according to stored data representation, such as may be generated and stored according to the method 500 of FIG. 5.

The method 700, in some embodiments and continuing from the method 500, includes receiving and storing 702 input associating the stored data representation to a merchant identifier. In such embodiments, when a payment transaction request is subsequently received from the identified merchant, the payment transaction request will be processed according to that specific stored data representation as is retrievable based upon the merchant identifier. The method 700 further includes receiving 704 a payment transaction request including the merchant identifier. The method 700 then identifies 706 the stored data representation, as stored on the data storage device, with the merchant identifier as a data retrieval key. The method 700 then continues to process 708 the payment transaction request according to the identified stored data representation.

Another embodiment is in the form of a system. The system of such embodiments includes at least one processor, at least one network interface device, and at least one data storage device. The data storage device may store a variety of data including, among other data, data structures of data processing nodes and data structures of payment transaction routing processes.

The data structures of data processing nodes are elements that can be assembled into payment transaction routing processes. Each of these data processing nodes includes at least one instruction to perform, or call a remote data processing service that performs, at least one data processing task related to payment transaction processing.

The data structures of payment transaction routing processes may hold a variety of data. Such data may include reference to data structures of data processing nodes, routing data linking data processing nodes in a specified order and structure, and other data.

The system of such embodiments also includes a payment processing module. The payment processing module is executable by the at least one processor of the system to perform various tasks associated with payment processing. These tasks, in some embodiments, include receiving, via the at least one network interface device, a payment transaction request from a requestor and identifying, in data stored on the data storage device, a data structure of an applicable payment transaction routing process. The payment processing module performs further tasks including process the payment transaction request and transmitting a result of the processing. The task of processing the payment transaction request is typically according to the payment transaction routing process defined in the identified data structure and includes executing instructions of each data processing node identified in the reference data of the identified data structure in a sequence according to the order and structure defined in the identified data structure. The transmitting of a result of the processing may include transmitting, via the at least one network interface device to the requestor, a result of the processing of the payment transaction request.

In some such embodiments of the system, the data structures of payment transaction routing processes include a merchant identifier that forms at least a portion of a data retrieval key by which the data structures of payment transaction routing processes are identifiable and retrievable from the data storage device. In these and other embodiments, other data may also, or alternatively, be considered in identifying the data structures of payment transaction routing processes.

Some embodiments of the system also include a development module. The development module is also executable by the at least one processor to perform process development-related data processing tasks. For example, these task may include receiving, via the at least one network interface device from a development requestor, a request for a data structure of a payment transaction process, the request including a merchant identifier. A next task may include retrieving the requested payment transaction process data structure with the received merchant identifier with the request as a data retrieval key. This sequence of tasks also includes transmitting, via the at least one network interface device, the retrieved payment transaction process data structure to the development requestor. In some embodiments, the tasks performed by the development module also include receiving an update to a payment transaction process data structure, the update including at least a merchant identifier and storing the update to a payment transaction process data structure identified based upon at least merchant identifier.

In some embodiments, of the system, the data storage device includes a database management system that executes on at least one computing device to manage data stored on one or more of disk drives and memory. Further, the at least one disk drive or memory that stores executable code files is typically referenced by data managed and stored by the database management system.

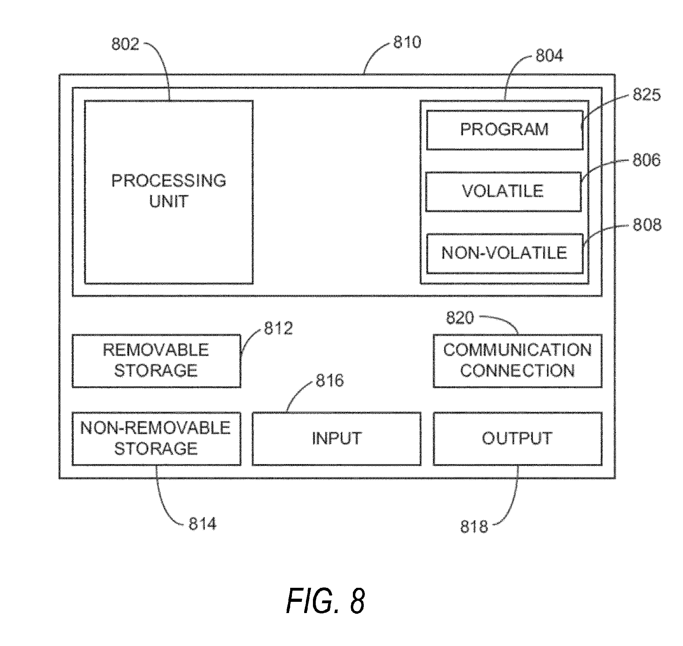

FIG. 8 is a block diagram of a computing device, according to an example embodiment. In one embodiment, multiple such computer devices are utilized in a distributed network to implement multiple components in a transaction-based environment. An object-oriented, service-oriented, or other architecture may be used to implement such functions and communicate between multiple computing devices, systems, and components. One example computing device in the form of a computer 810, may include a processing unit 802, memory 804, removable storage 812, and non-removable storage 814. Although the example computing device is illustrated and described as computer 810, the computing device may be in different forms in different embodiments. For example, the computing device may instead be a server, a smartphone, a tablet, or other computing device including the same or similar elements as illustrated and described with regard to FIG. 8. Further, although the various data storage elements are illustrated as part of the computer 810, the storage may also, or alternatively, include network-based, cloud-based, and other storage accessible via a network, such as a local area network, system area network, the Internet, or other network.

Returning to the computer 810, memory 804 may include volatile memory 806 and non-volatile memory 808. Computer 810 may include - or have access to a computing environment that includes a variety of computer-readable media, such as volatile memory 806 and non-volatile memory 808, removable storage 812 and non-removable storage 814. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 810 may include or have access to a computing environment that includes input 816, output 818, and a communication connection 820. The input 816 may include one or more of a touchscreen, touchpad, mouse, keyboard, camera, and other input devices. The computer may operate in a networked environment using a communication connection 820 to connect to one or more remote computers, such as database servers, web servers, and other computing device. An example remote computer may include a personal computer (PC), server, router, network PC, a peer device or other common network node, or the like. The communication connection 820 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 802 of the computer 810. A hard drive (magnetic disk or solid state), CD-ROM, and RAM are some examples of articles including a non-transitory computer-readable medium. For example, various computer programs 825 or apps, such as one or more applications and modules implementing one or more of the methods illustrated and described herein or an app or application that executes on a mobile device or is accessible via a web browser, may be stored on a non-transitory computer-readable medium.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method (500) comprising:
presenting, in a user interface (200) of a computing device, a palate (204) of graphical representations of payment transaction data processing nodes, each node representing a data processing task that may be included in processing a payment transaction, each node including associated code to perform at least one data processing function (step 502);
presenting, in the user interface (200), a canvas (202) within which nodes may be placed and linked, the links representing data processing routes between the nodes, and the nodes and links providing a graphical view of payment transaction processing routing (step 504);
receiving input selecting a node from the palate (204) and adding the selected node to the canvas (202) (step 506);
receiving input to add a route from an output of one node to an input of another node (step 508); and
storing, on a data storage device, a data representation of the graphical view including data identifying each node and routes therebetween (step 510).

2. The method of claim 1, further comprising:
receiving an input command to retrieve and present a graphical rendering of the stored data representation (step 602);
loading the stored data representation from the data storage device into a memory of the computing device (step 604);
identifying each node included in the loaded data and routes between the identified nodes (step 606); and
presenting, in the user interface of the computing device, the graphical view of the data representation.

3. The method of claim 1, further comprising:
receiving and storing input associating the stored data representation to a bank identifier that is identifiable in received transaction requests from a portion of a bank card number (step 702).

4. The method of claim 3, further comprising:
receiving, on another computer device, a payment transaction request including the merchant identifier (step 704);
identifying the stored data representation, as stored on the data storage device, with the merchant identifier as a data retrieval key (step 706); and
processing, on the another computing device, the payment transaction request according to the identified stored data representation (step 708).

5. The method of claim 4, wherein:
the payment transaction request is received via a first network; and
at least one node includes associated instructions executable to transmit, via a second network, a payment processing service call.

6. The method of claim 5, wherein at least one node of the stored data representation is a single representation of a plurality of nodes and routings therebetween.

7. The method of claim 6, wherein the at least one node, when rendered within the canvas (202) of the user interface (200), is represented by a single graphical representation of a node, the single graphical representation selectable to open a graphical view of the plurality of nodes and routings there between represented by the single node.

8. A payment processing module (124) implementing multi-destination routing, the module including a plurality of payment transaction routing processes, each payment transaction routing process comprising:
(i) a plurality of node data structures each including at least one instruction to implement a data processing task; and
(ii) routing data linking the plurality of nodes in a specified order and structure; the payment processing module being operable to:
(a) receive a payment transaction request from a requestor;
(b) identify an applicable routing process from the plurality of payment transaction routing processes;
(c) process the payment transaction request according to the applicable routing process by using accessing the node data structures according to the routing data; and
(d) transmit a result of the processing of the payment transaction request to the requestor.

9. The module of claim 8, wherein the payment processing module is operable to identify an applicable routing process using a merchant identifier.

10. The module of claim 8 or 9, wherein a node data structure comprises a plurality of node data structures within that node data structure, each including at least one instruction to implement a data processing task.

11. The module of any of claims 8 to 10, wherein a node data structure comprises a rollback option.

12. The module of any of claims 8 to 11, wherein a node data structure comprises a core banking node data structure configured for a specific banking entity that is to perform payment processing transactions relating to its customers.

13. The module of any of claims 8 to 12, wherein a node data structure includes trailing information defining properties of that node data structure, including a type of information expected to be received by that data structure as part of payment processing.

14. The module of any of claims 8 to 13, wherein the type of information expected to be received by that data structure comprises a bank identification number.

15. A computer-readable storage medium, including instructions stored thereon, which when executed by at least one processor cause the computer to implement all of the steps of any of claims 1 to 7.
